# EUROPEAN PATENT APPLICATION

(11) **EP 4 421 615 A1**
(43) Date of publication of application: **28.08.2024**
(21) Application number: 24159053.8
(22) Date of filing: 22.02.2024
(51) Int. Cl.: G06F 3/147

(54) **METHOD FOR CALIBRATING IMAGE DISPLAY DEVICE AND SYSTEM FOR THE SAME**

(30) Priority: 27.02.2023 KR 20230026130
(71) Applicant: LG Electronics Inc., Yeongdeungpo-gu Seoul 07336 (KR)
(72) Inventor: RYU, Bokhee, 06772 Seoul (KR); MOON, Han, 06772 Seoul (KR); HONG, Joonyong, 06772 Seoul (KR); SHIN, Myeongseon, 06772 Seoul (KR)
(74) Representative: Frenkel, Matthias Alexander

(57) **Abstract**

A method and system for calibrating an image display device are disclosed, which enable calibration of display characteristics of the image display device to be conveniently performed. The server for calibrating the image display device includes a setting value management unit configured to store a plurality of calibration setting values for calibration of a plurality of image display devices in a server, wherein the plurality of calibration setting values includes a first calibration setting value received from at least one of the plurality of image display devices and a second calibration setting value input by a user; and a task registration unit configured to, when one of the plurality of calibration setting values is selected, remotely request that the plurality of image display devices perform calibration based on the selected calibration setting value.

## Description

### TECHNICAL FIELD

The present disclosure relates to a setting method related to display characteristics of an image display device, and a system for the same.

### BACKGROUND

An image display device is a device that has the function of receiving, processing, and displaying digital images, such as a digital TV, a monitor, or the like.

Calibration refers to an operation of adjusting and optimizing luminance (brightness), color temperature, gamma, and other characteristics (hereinafter referred to as "display characteristics") of an image display device. Generally, calibration is performed at the time of manufacturing products in a factory. Recently, image display devices with built-in calibration units have been developed and introduced to enable calibration adjustment by a user.

As the image display device ages, performance of the image display device may deteriorate so that display characteristics may change. Even if the same display characteristic-related setting values are input to a plurality of image display devices, the actual display characteristics may be different for each of the plurality of image display devices depending on the degree of deterioration. Therefore, it is necessary to perform calibration of the image display device periodically or irregularly.

### DISCLOSURE

### TECHNICAL PROBLEM

Accordingly, embodiments of the present disclosure are directed to a method for calibrating an image display device and a system for the same that substantially obviates one or more problems due to limitations and disadvantages of the related art.

An object of the present disclosure is to provide a method and system for calibrating an image display device, which enable calibration of display characteristics of the image display device to be conveniently performed.

### TECHNICAL SOLUTION

In accordance with an aspect of the present disclosure, a server for calibrating an image display device may include: a setting value management unit configured to store a plurality of calibration setting values for calibration of a plurality of image display devices in a server, wherein the plurality of calibration setting values includes a first calibration setting value received from at least one of the plurality of image display devices and a second calibration setting value input by a user; and a task registration unit configured to, when one of the plurality of calibration setting values is selected, remotely request that the plurality of image display devices perform calibration based on the selected calibration setting value.

The setting value management unit may store a plurality of verification setting values for verification of the plurality of image display devices, wherein the plurality of verification setting values includes a first verification setting value received from at least one of the plurality of image display devices. When one of the plurality of verification setting values is selected, ; and the task registration unit may remotely request that the plurality of image display devices perform verification based on the selected verification setting value.

The plurality of calibration setting values may further include a third calibration setting value stored as a default in the server, wherein the plurality of verification setting values further includes a second verification setting value stored as a default in the server.

The task registration unit may request that the plurality of image display devices perform at least one of the calibration and the verification through a plurality of client terminals.

The server may further include a group management unit configured to group the plurality of image display devices into two or more groups, wherein the task registration unit requests execution of calibration for each group.

When there are two or more image display devices belonging to each group, the two or more image display devices may be connected to the server through different client terminals.

The server may further include a task scheduler management unit configured to determine a schedule for calibration of image display devices of each group, wherein the task registration unit requests that the image display devices for each group perform according to the schedule.

The server may further include an image display device registration unit configured to store characteristic information of the plurality of image display devices. The setting value management unit is configured to, when the plurality of image display devices is unable to support the selected calibration setting value according to the characteristic information, change the selected calibration setting value based on the characteristic information.

The server may further include a user interface unit configured to display a user interface for creating, modifying, storing and deleting the calibration setting value.

The server may further include the calibration setting value includes data related to luminance, color temperature, and gamma setting of the image display device.

In accordance with another aspect of the present disclosure, a method for calibrating an image display device may include: storing a plurality of calibration setting values for calibration of a plurality of image display devices in a server, wherein the plurality of calibration setting values includes a first calibration setting value received from at least one of the plurality of image display devices and a second calibration setting value input by a user; and when one of the plurality of calibration setting values is selected, remotely requesting that the server instructs the plurality of image display devices to perform calibration based on the selected calibration setting value.

In accordance with another aspect of the present disclosure, a recording medium for storing program configured to be executed by a computer for calibration of an image display device may include: a command configured to store a plurality of calibration setting values for calibration of a plurality of image display devices, wherein the plurality of calibration setting values includes a first calibration setting value received from at least one of the plurality of image display devices and a second calibration setting value input by a user; and a command configured to, when one of the plurality of calibration setting values is selected, remotely request that the plurality of image display devices perform calibration based on the selected calibration setting value.

It is to be understood that both the foregoing general description and the following detailed description of the present disclosure are exemplary and explanatory and are intended to provide further explanation of the disclosure as claimed.

### ADVANTAGEOUS EFFECTS

As is apparent from the above description, the effects of the method and system for calibrating the image display device according to the present disclosure are as follows.

According to one aspect of the present disclosure, calibration and/or verification may be performed on the image display device by selecting one of various calibration and/or verification setting values. For example, calibration and/or verification setting values for one image display device may be used for calibration and/or verification for another image display device, so that multiple image display devices can be calibrated and/or verified to have the same display characteristics.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.
FIG. 1 is a schematic block diagram illustrating an image display device according to an embodiment of the present disclosure.
FIG. 2 is a diagram illustrating a calibration system for an image display device according to one aspect of the present disclosure.
FIG. 3 is a block diagram illustrating an image display device server according to one aspect of the present disclosure.
FIGS. 4 and 5 are flowcharts illustrating example methods for performing calibration of the image display device through the image display device server according to one aspect of the present disclosure.
FIG. 6 is a conceptual diagram illustrating an example in which a plurality of monitors is grouped into two or more groups for calibration and/or verification tasks according to one aspect of the present disclosure.
FIG. 7 shows an example of a user interface (UI) for creating, modifying, storing, and deleting calibration setting values according to one aspect of the present disclosure.
FIG. 8 shows an example of a user interface (UI) for selection of calibration setting values according to one aspect of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

The terms "module" and "unit" attached to describe the names of components are used herein to help the understanding of the components and thus should not be considered as having specific meanings or roles. Accordingly, the terms "module" and "unit" may be used interchangeably.

Each of these elements may be configured as a separate individual hardware module or implemented as two or more hardware modules. Two or more elements may be implemented as a single hardware module. In some cases, at least one of these elements may be implemented as software.

Aspects of this disclosure will be described in detail with reference to the attached drawings, but it should be understood that they are merely illustrative of this disclosure and should not be interpreted as limiting the scope of this disclosure.

In addition, although the terms used in this disclosure are selected from generally known and used terms, some of the terms mentioned in the description of this disclosure, the detailed meanings of which are described in relevant parts of the description herein, have been selected at the discretion of the applicant. Furthermore, this disclosure must be understood, not simply by the actual terms used but by the meanings of each term lying within.

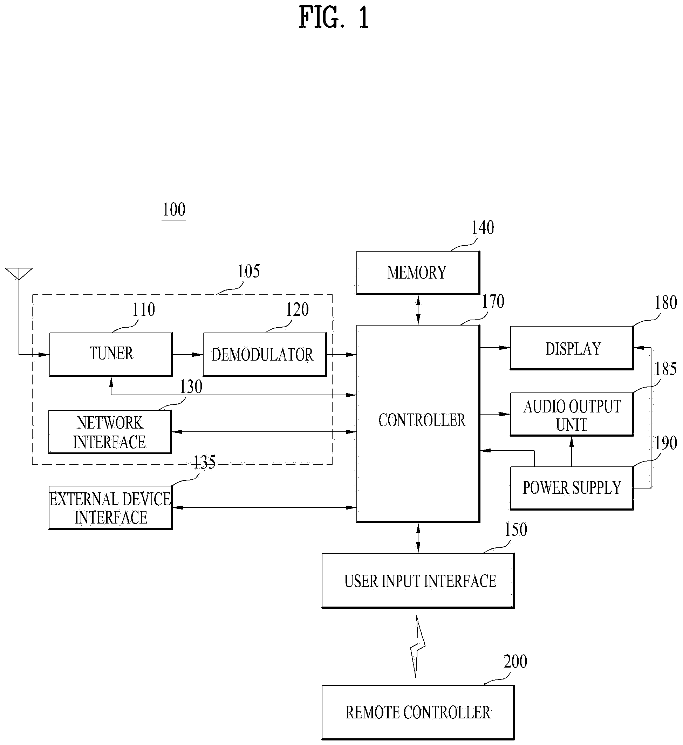

FIG. 1 is a schematic block diagram of an image display device according to one embodiment of the present disclosure. The image display device may be a display device capable of outputting images while having a display panel. For example, the image display device may include a computer monitor, a TV, a projector, a smartphone, a laptop, a digital signage, etc.

Referring to FIG. 1, an image display device 100 according to one aspect of this disclosure includes a broadcast receiver 105, an external device interface 135, a memory 140, a user input interface 150, a controller 170, a display 180, an audio output unit 185, a power supply 190, and a camera module (not shown). If the image display device 100 is a computer monitor, the image display device 100 may not include at least one of a broadcast receiver 105, an audio output unit 183, and a photographing unit.

The broadcast receiver 105 may include a tuner 110, a demodulator 120 and a network interface 130. As needed, the broadcast receiver 105 may be configured so as to include only the tuner 110 and the demodulator 120 or only the network interface 130.

The tuner 110 tunes to a Radio Frequency (RF) broadcast signal corresponding to a channel selected by a user from among a plurality of RF broadcast signals received through an antenna and downconverts the tuned RF broadcast signal into a digital Intermediate Frequency (IF) signal or an analog baseband video or audio signal.

More specifically, if the tuned RF broadcast signal is a digital broadcast signal, the tuner 110 downconverts the tuned RF broadcast signal into a digital IF signal DIF. On the other hand, if the tuned RF broadcast signal is an analog broadcast signal, the tuner 110 downconverts the tuned RF broadcast signal into an analog baseband video or audio signal CVBS/SIF. That is, the tuner 110 may be a hybrid tuner capable of processing not only digital broadcast signals but also analog broadcast signals. The analog baseband video or audio signal CVBS/SIF may be directly input to the controller 170.

The tuner 110 may be capable of receiving RF broadcast signals from an Advanced Television Systems Committee (ATSC) single-carrier system or from a Digital Video Broadcasting (DVB) multi-carrier system.

The tuner 110 may sequentially tune to a number of RF broadcast signals corresponding to all broadcast channels previously stored by a channel storage function from a plurality of RF signals received through the antenna and may downconvert the tuned RF broadcast signals into IF signals or baseband video or audio signals.

The demodulator 120 receives the digital IF signal DIF from the tuner 110 and demodulates the digital IF signal DIF.

For example, if the digital IF signal DIF is an ATSC signal, the demodulator 120 may perform 8-Vestigal SideBand (VSB) demodulation on the digital IF signal DIF. The demodulator 120 may also perform channel decoding. For channel decoding, the demodulator 120 may include a Trellis decoder (not shown), a de-interleaver (not shown) and a Reed-Solomon decoder (not shown) so as to perform Trellis decoding, de-interleaving and Reed-Solomon decoding.

For example, if the digital IF signal DIF is a DVB signal, the demodulator 120 performs Coded Orthogonal Frequency Division Multiple Access (COFDMA) demodulation upon the digital IF signal DIF. The demodulator 120 may also perform channel decoding. For channel decoding, the demodulator 120 may include a convolution decoder (not shown), a de-interleaver (not shown), and a Reed-Solomon decoder (not shown) so as to perform convolution decoding, de-interleaving, and Reed-Solomon decoding.

The demodulator 120 may perform demodulation and channel decoding on the digital IF signal DIF, thereby obtaining a Transport Stream (TS). The TS may be a signal in which a video signal, an audio signal and a data signal are multiplexed. For example, the TS may be an MPEG-2 TS in which an MPEG-2 video signal and a Dolby AC-3 audio signal are multiplexed. An MPEG-2 TS may include a 4-byte header and a 184-byte payload.

In order to properly handle not only ATSC signals but also DVB signals, the demodulator 120 may include an ATSC demodulator and a DVB demodulator.

The TS output from the demodulator 120 may be input to the controller 170 and thus subjected to demultiplexing and A/V signal processing. The processed video and audio signals are output to the display 180 and the audio output unit 185, respectively.

The external device interface 135 may serve as an interface between an external device and the image display device 100. For interfacing, the external device interface 135 may include an A/V Input/Output (I/O) unit (not shown) and/or a wireless communication module (not shown).

The external device interface 135 may be connected to an external device such as a Digital Versatile Disc (DVD) player, a Blu-ray player, a game console, a camera, a camcorder, or a computer (e.g., a laptop computer), wirelessly or by wire. Then, the external device interface 135 externally receives video, audio, and/or data signals from the external device and transmits the received input signals to the controller 170. In addition, the external device interface 135 may output video, audio, and data signals processed by the controller 170 to the external device. In order to receive or transmit audio, video and data signals from or to the external device, the external device interface 135 includes the A/V I/O unit (not shown) and/or the wireless communication module (not shown).

The A/V I/O unit may include a Universal Serial Bus (USB) port, a Composite Video Banking Sync (CVBS) port, a Component port, a Super-video (S-video) (analog) port, a Digital Visual Interface (DVI) port, a High-Definition Multimedia Interface (HDMI) port, a Red-Green-Blue (RGB) port, and a D-sub port, in order to input the video and audio signals of the external device to the image display device 100.

The wireless communication module may perform short-range wireless communication with other electronic devices. For short-range wireless communication, the wireless communication module may use Bluetooth, Radio-Frequency IDentification (RFID), Infrared Data Association (IrDA), Ultra WideBand (UWB), ZigBee, and Digital Living Network Alliance (DLNA) communication standards.

The external device interface 135 may be connected to various set-top boxes through at least one of the above-described ports and may thus perform an I/O operation with the various set-top boxes.

The external device interface 135 may receive applications or an application list from an adjacent external device and provide the applications or the application list to the controller 170 or the memory 140.

The network interface 130 serves as an interface between the image display device 100 and a wired/wireless network such as the Internet. The network interface 130 may include an Ethernet port for connection to a wired network. For connection to wireless networks, the network interface 130 may use Wireless Local Area Network (WLAN) (i.e., Wi-Fi), Wireless Broadband (WiBro), World Interoperability for Microwave Access (WiMax), and High Speed Downlink Packet Access (HSDPA).

The network interface 130 may transmit data to or receive data from another user or electronic device over a connected network or another network linked to the connected network. Especially, the network interface 130 may transmit data stored in the image display device 100 to a user or electronic device selected from among users or electronic devices pre-registered with the image display device 100.

The network interface 130 may access a specific Web page over a connected network or another network linked to the connected network. That is, the network interface 130 may access a specific Web page over a network and transmit or receive data to or from a server. Additionally, the network interface 130 may receive content or data from a CP or an NP. Specifically, the network interface 130 may receive content such as movies, advertisements, games, VoD, and broadcast signals, and information related to the content from a CP or an NP. Also, the network interface 130 may receive update information about firmware from the NP and update the firmware. The network interface 130 may transmit data over the Internet or to the CP or the NP.

The network interface 130 may selectively receive a desired application among open applications over a network.

In an aspect of this disclosure, when a game application is executed in the image display device, the network interface 130 may transmit data to or receive data from a user terminal connected to the image display device through a network. In addition, the network interface 130 may transmit specific data to or receive specific data from a server that records game scores.

The memory 140 may store various programs necessary for the controller 170 to process and control signals, and may also store processed video, audio and data signals.

The memory 140 may temporarily store a video, audio and/or data signal received from the external device interface 135 or the network interface 130. The memory 140 may store information about broadcast channels by the channel storage function.

The memory 140 may store applications or a list of applications received from the external device interface 135 or the network interface 130.

In an aspect of this disclosure, when the image display device provides a game application, the memory 140 may store user-specific information and game play information of a user terminal used as a game controller.

The memory 140 may include, for example, at least one of a flash memory-type storage medium, a hard disk-type storage medium, a multimedia card micro-type storage medium, a card-type memory (e.g. a Secure Digital (SD) or eXtreme Digital (XD) memory), a Random Access Memory (RAM), or a Read-Only Memory (ROM) such as an Electrically Erasable and Programmable Read Only Memory (EEPROM). The image display device 100 may reproduce content stored in the memory 140 (e.g. video files, still image files, music files, text files, and application files) to the user.

While the memory 140 is shown in FIG. 1 as configured separately from the controller 170, to which this disclosure is not limited, the memory 140 may be incorporated into the controller 170, for example.

The user input interface 150 transmits a signal received from the user to the controller 170 or transmits a signal received from the controller 170 to the user.

For example, the user input interface 150 may receive control signals such as a power-on/off signal, a channel selection signal, and a screen setting signal from a remote controller 200 or may transmit a control signal received from the controller 170 to the remote controller 200, according to various communication schemes, for example, RF communication and IR communication.

For example, the user input interface 150 may provide the controller 170 with control signals received from local keys (not shown), such as inputs of a power key, a channel key, and a volume key, and setting values.

Also, the user input interface 150 may transmit a control signal received from a sensor unit (not shown) for sensing a user gesture to the controller 170 or transmit a signal received from the controller 170 to the sensor unit. The sensor unit may include a touch sensor, a voice sensor, a position sensor, a motion sensor, etc.

The controller 170 may demultiplex the TS received from the tuner 110, the demodulator 120, or the external device interface 135 into a number of signals and process the demultiplexed signals into audio and video data.

The video signal processed by the controller 170 may be displayed as an image on the display 180. The video signal processed by the controller 170 may also be transmitted to an external output device through the external device interface 135.

The audio signal processed by the controller 170 may be audibly output through the audio output unit 185. Also, the audio signal processed by the controller 170 may be transmitted to the external output device through the external device interface 135.

While not shown in FIG. 1, the controller 170 may include a DEMUX and a video processor, which will be described later with reference to FIG. 10.

In addition, the controller 170 may provide overall control to the image display device 100. For example, the controller 170 may control the tuner 110 to tune to an RF broadcast signal corresponding to a user-selected channel or a pre-stored channel.

The controller 170 may control the image display device 100 according to a user command received through the user input interface 150 or according to an internal program. Especially the controller 170 may access a network and download an application or application list selected by the user to the image display device 100 over the network.

For example, the controller 170 controls the tuner 110 to receive a signal of a channel selected according to a specific channel selection command received through the user input interface 150 and processes a video, audio and/or data signal of the selected channel. The controller 170 outputs the processed video or audio signal along with information about the user-selected channel to the display 180 or the audio output unit 185.

As another example, the controller 170 outputs a video or audio signal received from an external device such as a camera or a camcorder through the external device interface 135 to the display 180 or the audio output unit 185 according to an external device video playback command received through the external device interface 150.

The controller 170 may control the display 180 to display images. For instance, the controller 170 may control the display 180 to display a broadcast image received from the tuner 110, an externally input image received through the external device interface 135, an image received through the network interface 130, or an image stored in the memory 140. The image displayed on the display 180 may be a Two-Dimensional (2D) or Three-Dimensional (3D) still image or moving picture.

The controller 170 may control content playback. The content may include any content stored in the image display device 100, received broadcast content, and externally input content. The content includes at least one of a broadcast image, an externally input image, an audio file, a still image, a Web page, or a text file.

Upon receipt of a return-to-home screen input, the controller 170 may control display of the home screen on the display 180.

The home screen may include a plurality of card objects classified according to content sources. The card objects may include at least one of a card object representing a thumbnail list of broadcast channels, a card object representing a broadcast program guide, a card object representing a program reservation list or a program recording list, or a card object representing a media list of a device connected to the image display device. The card objects may further include at least one of a card object representing a list of connected external devices or a card object representing a call-associated list.

The home screen may further include an application menu including at least one application that can be executed.

Upon receipt of a card object move input, the controller 170 may control movement of a card object corresponding to the card object move input on the display 180, or if the card object is not displayed on the display 180, the controller 170 may control display of the card object on the display 180.

When a card object is selected from among the card objects on the home screen, the controller 170 may control display of an image corresponding to the selected card object on the display 180.

The controller 170 may control display of an input broadcast image and an object representing information about the broadcast image in a card object representing broadcast images. The size of the broadcast image may be set to a fixed size.

The controller 170 may control display of a set-up object for at least one of image setting, audio setting, screen setting, reservation setting, setting of a pointer of the remote controller, or network setting on the home screen.

The controller 170 may control display of a log-in object, a help object, or an exit object on a part of the home screen.

The controller 170 may control display of an object representing the total number of available card objects or the number of card objects displayed on the display 180 among all card objects, on a part of the home screen.

If one of the card objects displayed on the display 180 is selected, the controller 170 may fullscreen the selected card object to cover the entirety of the display 180.

Upon receipt of an incoming call at a connected external device or the image display device 100, the controller 170 may control focusing-on or shift of a call-related card object among the plurality of card objects.

If an application view menu item is selected, the controller 170 may control display of applications or a list of applications that are present in the image display device 100 or downloadable from an external network.

The controller 170 may control installation and execution of an application downloaded from the external network along with various UIs. Also, the controller 170 may control display of an image related to the executed application on the display 180, upon user selection.

Although not shown, the image display device 100 may further include a channel browsing processor for generating thumbnail images corresponding to channel signals or externally input signals.

The channel browsing processor may receive the TS output from the demodulator 120 or the TS output from the external device interface 135, extract images of the received TS and generate thumbnail images. The thumbnail images may be directly output to the controller 170 or may be output after being encoded. Also, it is possible to encode the thumbnail images into a stream and output the stream to the controller 170. The controller 170 may display a thumbnail list including a plurality of received thumbnail images on the display 180. The thumbnail images may be updated sequentially or simultaneously in the thumbnail list. Therefore, the user can readily identify the content of broadcast programs received through a plurality of channels.

The display 180 may convert a processed video signal, a processed data signal, and an OSD signal received from the controller 170 or a video signal and a data signal received from the external device interface 135 into RGB signals, thereby generating driving signals.

The display 180 may be various types of displays such as a Plasma Display Panel (PDP), a Liquid Crystal Display (LCD), an Organic Light-Emitting Diode (OLED) display, a flexible display, and a 3D display.

The display 180 may also be a touchscreen that can be used not only as an output device but also as an input device.

The audio output unit 185 may receive a processed audio signal (e.g., a stereo signal, a 3.1-channel signal or a 5.1-channel signal) from the controller 170 and output the received audio signal as sound. The audio output unit 185 may employ various speaker configurations.

To sense a user gesture, the image display device 100 may further include the sensor unit (not shown) that has at least one of a touch sensor, a voice sensor, a position sensor, and a motion sensor, as stated before. A signal sensed by the sensor unit may be output to the controller 170 through the user input interface 150.

The image display device 100 may further include the camera unit (not shown) for capturing images of a user. Image information captured by the camera unit may be input to the controller 170.

The controller 170 may sense a user gesture from an image captured by the camera unit or a signal sensed by the sensor unit, or by combining the captured image and the sensed signal.

The power supply 190 supplies power to the image display device 100.

Particularly, the power supply 190 may supply power to the controller 170 which may be implemented as a System On Chip (SOC), the display 180 for displaying an image, and the audio output unit 185 for audio output.

For supplying power, the power supply 190 may include a converter (not shown) for converting Alternating Current (AC) into Direct Current (DC). If the display 180 is configured with, for example, a liquid crystal panel having a plurality of backlight lamps, the power supply 190 may further include an inverter (not shown) capable of performing Pulse Width Modulation (PWM) for luminance change or dimming driving.

The remote controller 200 transmits a user input to the user input interface 150. For transmission of user input, the remote controller 200 may use various communication techniques such as Bluetooth, RF communication, IR communication, Ultra Wideband (UWB) and ZigBee.

In addition, the remote controller 200 may receive a video signal, an audio signal or a data signal from the user input interface 150 and output the received signals visually, audibly or as vibrations.

The above-described image display device 100 may be a fixed digital broadcast receiver capable of receiving at least one of ATSC (8-VSB) broadcast programs, DVB-T (COFDM) broadcast programs, and ISDB-T (BST-OFDM) broadcast programs.

Although not shown, the image display device 100 may include at least one of a display output light measurement sensor (not shown) for sensing output light characteristics (for example, luminance, color temperature, gamma, etc.) of the display 100, and an ambient light measurement sensor (not shown) for measuring ambient light.

The block diagram of the image display device 100 illustrated in FIG. 1 is purely exemplary. Depending upon the specifications of the image display device 100 in actual implementation, the components of the image display device 100 may be combined or omitted or new components may be added. That is, two or more components may be incorporated into one component or one component may be configured as separate components, as needed. In addition, the function of each block is described for the purpose of describing the aspect of this disclosure and thus specific operations or devices should not be construed as limiting the scope and spirit of this disclosure.

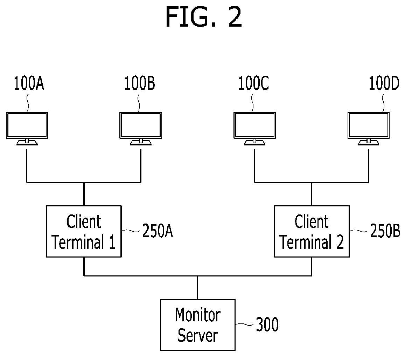

Hereinafter, a system for calibrating the image display device 100 will be described with reference to FIG. 2. FIG. 2 shows a calibration system for the image display device according to one aspect of the present disclosure.

Hereinafter, it is assumed that the image display device 100 is a monitor capable of displaying various visual information output from a client terminal by connecting to the client terminal such as a computer or workstation. Of course, it should be noted that the content of the present disclosure can also be applied to other types of image display devices other than the monitor.

A monitor server (or calibration server) 300 may communicate with at least one client terminal. In FIG. 2, the first client terminal 250A and the second client terminal 250B communicate with the monitor server 300, but this is merely an example, and it should be noted that fewer or more client terminals than the example of FIG. 2 can communicate with the monitor server 300.

At least one monitor 100 may be connected to each of the client terminals (250A, 250B). The monitor 100 may be connected to the corresponding client terminals (250A, 250B) through a network interface unit 130 or an external device interface unit 135. Here, the network interface unit 130 and the external device interface unit 135 are included in the monitor 100.

In FIG. 2, the first monitor 100A and the second monitor 100B may be connected to the first client terminal 250A, and the third monitor 100C and the fourth monitor 100D may be connected to the second client terminal 250B, but the scope of the present disclosure is not limited thereto, and it should be noted that fewer or more monitors than those of FIG. 2 may also be connected to each client terminal. For example, four monitors may be connected to each client terminal 250A or 250B.

A corresponding memory 140 of each monitor 100 may store setting values for calibrating display characteristics of the monitor 100 (hereinafter referred to as calibration setting values). The setting values may be data related to setting display characteristics (e.g., luminance, color temperature, gamma, etc.) of the monitor. The calibration refers to the operation of determining whether display characteristics of the monitor are output to match the setting values of the monitor, and adjusting the display characteristics of the monitor to match the setting values of the monitor when the display characteristics of the monitor are not output to match the setting values of the monitor.

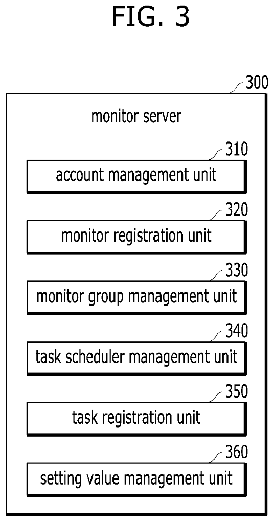

A detailed structure of the monitor server 300 will hereinafter be described with reference to FIG. 3. FIG. 3 is a block diagram illustrating a monitor server according to one aspect of the present disclosure.

The monitor server 300 may include an account management unit 310, a monitor registration unit 320, a monitor group management unit 330, a task scheduler management unit 340, a task registration unit 350, and a setting value management unit 360. The above-described components may be integrated, added, or omitted depending on specifications of the monitor server 300 that is actually implemented.

The account management unit 310 may create and manage an account for the client terminal 250 or a user thereof to access the monitor server 300.

The monitor registration unit 320 may register, store, and manage monitor information of each of a plurality of monitors that can be controlled through the monitor server 300 for each account. Information on each monitor and the client terminal connected to each monitor can be registered, stored, and managed by the monitor registration unit 320.

The monitor group management unit 330 may allow the plurality of monitors to be grouped into two or more groups, and may store and manage information for each group. An administrator who manages the monitor server 300 may group the plurality of monitors into a desired number of groups through the monitor group management unit 330. When the plurality of monitors is grouped, the monitor server 300 may collectively perform calibration and/or verification tasks for each group.

The task scheduler management unit 340 may perform scheduling for calibration and/or verification tasks for the plurality of monitors, and may manage and store a necessary schedule. The scheduling may be performed for each monitor and/or for each group. The administrator of the monitor server 300 may determine a schedule for calibration and/or verification tasks for the plurality of monitors through the scheduler management unit 340. The schedule may be regular or irregular. The schedule may be the same or different for each monitor or each group.

The task register 350 may request calibration and/or verification tasks from the corresponding monitor according to the above schedule. The task register 350 may remotely instruct the monitor to perform calibration and/or verification tasks through the client terminal connected to the corresponding monitor.

The setting value management unit 360 may store a calibration setting value and/or verification setting value corresponding to each monitor. The verification setting value will be explained later. If necessary, the setting value management unit 360 may change the calibration setting value and/or the verification setting value, which will also be described later.

Meanwhile, although not shown, the server 300 may further include a user interface (UI) unit for displaying a user interface (UI) for inputting and outputting data and/or information for the administrator of the server. Additionally, the monitor server 300 may further include a history management database (DB) that manages a history of calibration and/or verification tasks.

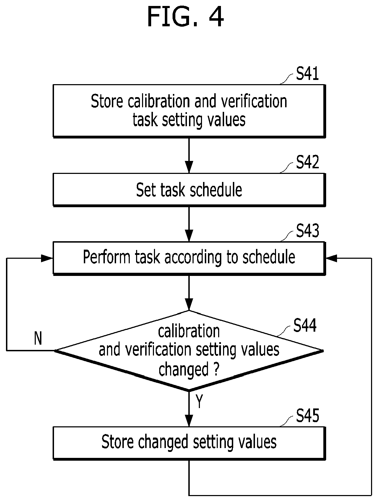

Through the above-described configuration, the monitor server 300 may perform calibration for each monitor by communicating with each monitor through the corresponding client terminal (for example, by remotely connecting to each monitor). Hereinafter, a process for calibrating the monitor 100 through the monitor server 300 will be described with reference to FIG. 4. FIG. 4 is a flowchart illustrating a method for calibrating the image display device through the monitor server according to one aspect of the present disclosure.

First, one or more calibration setting values may be stored in each monitor 100 (S41). The calibration setting value may be a value stored as a default when the monitor 100 is shipped from the factory, or may be a value modified by the user. The calibration setting value may be the same for two or more monitors, or may be different for each monitor. Additionally, each monitor 100 may store setting values related to verification or quality assurance (QA) (hereinafter referred to as verification setting values) (S41). The verification means checking whether the monitor 100 complies with relevant standards according to the use purpose of the monitor 100 (e.g., medical use, etc.). In other words, the verification setting value may be understood as data necessary to confirm whether the monitor satisfies the standards according to the monitor's usages. The verification setting value may vary depending on the corresponding standard for each purpose of the monitor. The verification setting value may be a value that was stored as a default when the monitor 100 is shipped from the factory, or may be a value modified by the user. That is, each monitor 100 may store at least one of the calibration setting value and the verification setting value.

The monitor server 300 may set (or determine) a work schedule for at least one of calibration and verification for monitors capable of communicating with the monitor server 300 (S42). As a result, the administrator (or operator) of the monitor server 300 may directly schedule the respective monitors regularly or irregularly.

Next, the monitor server 300 may remotely perform at least one of calibration and verification for the target monitor according to the above schedule by using at least one of the calibration setting value and the verification setting value stored in the corresponding target monitor (S43).

Then, the monitor server 300 may determine whether the calibration setting value has been changed through the calibration task and/or whether the verification setting value has been changed through the verification task (S44).

If at least one of the calibration setting value and the verification setting value has not been changed, the process may proceed again to step S43.

If at least one of the calibration setting value and the verification setting value has been changed, the monitor server 300 may remotely control the corresponding monitor to store at least one of the changed calibration setting value and the changed verification setting value. Thereafter, the processing stage may proceed again to step S43.

In the calibration and verification task for each monitor, the calibration setting value and verification setting value stored in each monitor do not necessarily have to be used. In the calibration and verification operations for each monitor, the calibration setting values and the verification setting values stored in each monitor are not necessarily used. In the calibration and verification tasks for each monitor, one of a plurality of calibration setting values stored in the monitor server and one of a plurality of verification setting values stored in the monitor server may be selected and used, or the calibration setting value and verification setting value that are stored in another monitor may also be used.

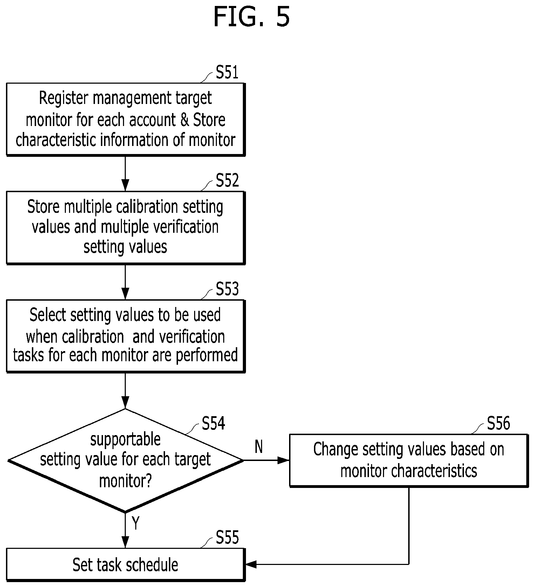

In the calibration and verification tasks for each monitor, the above-described method in which one of the plurality of calibration setting values and one of the plurality of verification setting values stored in the monitor server are selected and used will be given in detail with reference to FIG. 5. FIG. 5 is a flowchart illustrating a method for performing calibration of the image display device through the image display device server according to one aspect of the present disclosure.

The monitor server 300 may register at least one management target monitor for each account and store characteristic information of each management target monitor (S51). The monitor server 300 may receive a list of management target monitors corresponding to each account and characteristic information of each management target monitor from the client terminal, and may store the received list of management target monitors. The list of the management target monitors and the characteristic information of each management target monitor may be stored in the monitor registration unit 320.

In addition to the characteristic information of the management target monitor, the monitor server 300 may store the plurality of calibration setting values and/or the plurality of verification setting values (S52). The monitor server 300 may store at least one of the plurality of calibration setting values and/or at least one of the plurality of verification setting values as preset setting values upon receiving each calibration setting value and/or each verification setting value stored in each management target monitor. Alternatively, at least one of the plurality of calibration setting values and/or at least one of the plurality of verification setting values may be preset setting value(s) received from a manufacturer of the monitor to be managed. Alternatively, at least one of the plurality of calibration setting values and/or at least one of the plurality of verification setting values may be preset setting value(s) input by the administrator of the monitor server 300. The plurality of calibration setting values and/or the plurality of verification setting values may be stored in the setting value management unit 360. The user interface for inputting the calibration setting value and the verification setting value will be described later.

Next, the monitor server 300 may select the calibration setting value and/or verification setting value to be used when performing calibration and/or verification tasks for each target monitor (S53). Selection of the calibration setting value and/or the verification setting value may be performed by the administrator of the monitor server 300. The user interface required for selecting the calibration setting value and/or the verification setting value will be described later.

Then, the monitor server 300 may determine whether the selected calibration setting value and/or the selected verification setting value are supported setting values for each management target monitor (S54). That is, it can be determined whether the management target monitor can support the selected calibration setting value and/or the selected verification setting value based on characteristics (or performance) thereof.

If the selected calibration setting value and/or the selected verification setting value are supported setting values for each corresponding management target monitor, the monitor server 300 may perform scheduling so that the calibration task and/or the verification task are performed with the selected calibration setting value and/or the selected verification setting value for the corresponding management target monitor (S55).

If the selected calibration setting value and/or the verification setting value are not supported setting value(s) for each management target monitor, the monitor server 300 may change the selected calibration setting value and/or the verification setting value so as to be within a range supported by the corresponding management target monitor (S56). The monitor server 300 may change the calibration setting value and/or the verification setting value for each monitor.

The monitor server 300 may perform scheduling so that the calibration task and/or the verification task are performed with the changed calibration setting value and/or the changed verification setting value for the corresponding management target monitor (S55).

As previously discussed, the calibration task and/or the verification task are performed after scheduling.

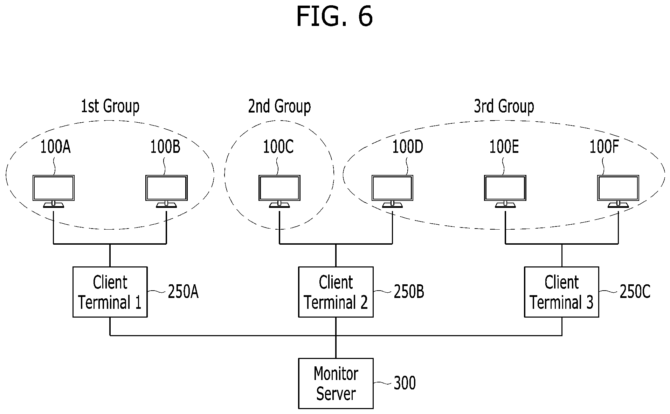

Hereinafter, a method for grouping a plurality of monitors into two or more groups and collectively performing calibration and/or verification tasks for each group will be described with reference to FIG. 6. FIG. 6 is a diagram illustrating an example in which a plurality of monitors is grouped into two or more groups for calibration and/or verification tasks according to one aspect of the present disclosure.

Referring to FIG. 6, the first client terminal 250A, the second client terminal 250B, and the third client terminal 250C may communicate with the monitor server 300. The first monitor 100A and the second monitor 100B may be connected to the first client terminal 250A, and the third monitor 100C and the fourth monitor 100D may be connected to the second client terminal 250B, and the fifth monitor 100E and the sixth monitor 100F may be connected to the third client terminal 250B.

In this case, all monitors (e.g., first monitor 100A and second monitor 100B) connected to one client terminal (e.g., first client terminal 250A) may be grouped into one group (e.g., first group).

Alternatively, only some monitors (e.g., third monitor 100C) from among all monitors connected to one client terminal (e.g., second client terminal 250B) may be grouped into one group (e.g., second group).

Alternatively, a monitor (e.g., fourth monitor 100D) connected to one client terminal (e.g., second client terminal 250B) and a monitor (e.g., the fifth monitor 100E and the sixth monitor 100F) connected to another client terminal (e.g., third client terminal 250C) may be grouped into one group (e.g., third group).

Although not shown, of course, all monitors connected to two or more client terminals may also be grouped into one group.

As described above, the monitor server 300 may collectively perform calibration and/or verification tasks for each group according to a schedule. A monitor need not necessarily belong to only one group, and may belong to two or more groups. When one monitor belongs to two or more groups, calibration and/or verification tasks may be performed whenever calibration and/or verification tasks are performed for each group.

When calibration and/or verifications task are performed for each group, the same calibration setting value and/or the same verification setting value may also be collectively applied to the respective groups.

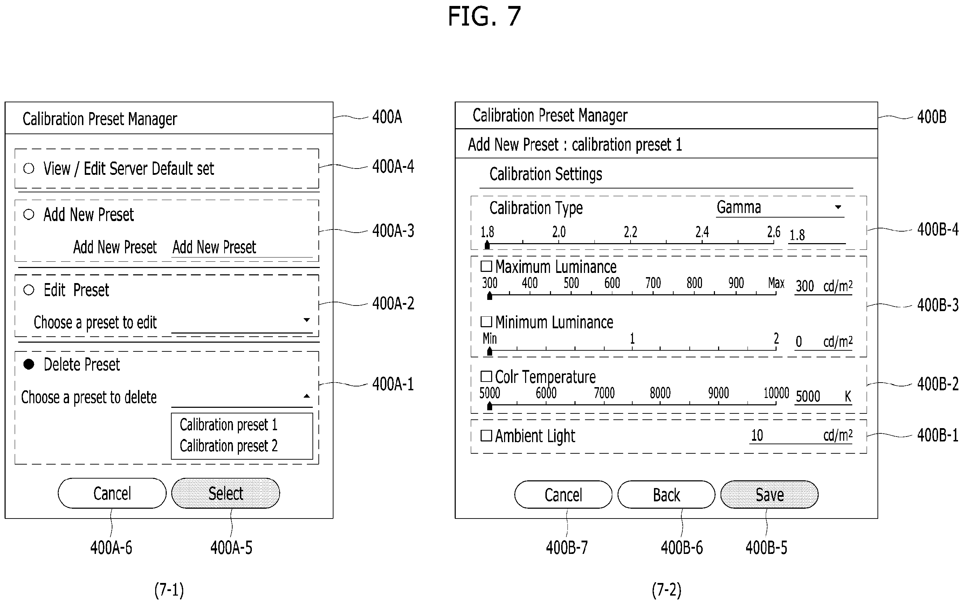

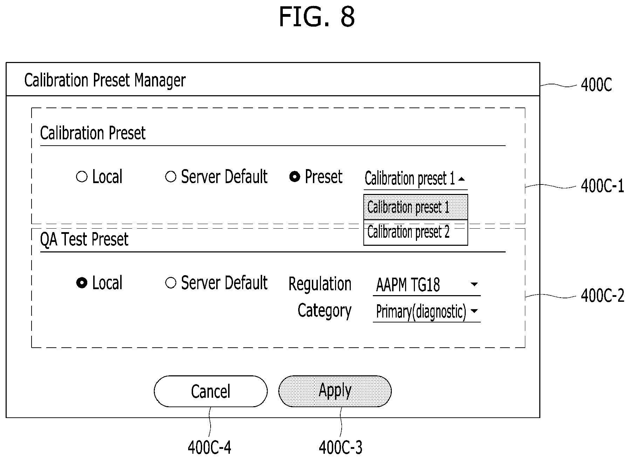

Hereinafter, a user interface for creating, modifying, storing, deleting, and selecting the calibration setting values through the monitor server will be described with reference to FIGS. 7 and 8. FIG. 7 shows an example of a user interface (UI) for creating, modifying, storing, and deleting calibration setting values according to one aspect of the present disclosure. FIG. 8 shows an example of a user interface (UI) for selection of calibration setting values according to one aspect of the present disclosure.

When the monitor server 300 enters a calibration menu for the calibration (and/or verification) task, the monitor server 300 may output (or display) a first user interface 400A as shown in FIG. 7(7-1).

A deletion menu (400A-1) for selecting and deleting one of the plurality of calibration setting values (e.g., "Calibration Preset 1" and "Calibration Preset 2") pre-stored in the monitor server 300 may be displayed on the first user interface 400A. When one of the plurality of calibration setting values is selected from the delete menu 400A-1 by the administrator of the monitor server 300 and then a first icon 400A-5 is selected, the selected calibration setting value may be deleted from the monitor server 300. Meanwhile, when a second icon 400A-6 is selected, the monitor server 300 may exit the calibration menu.

An editing menu 400A-2 for selecting and modifying one of the plurality of calibration setting values (e.g., "Calibration Preset 1" and "Calibration Preset 2") prestored in the monitor server 300 may be displayed on the first user interface 400A. When one of the plurality of calibration setting values is selected from the editing menu 400A-2 by the administrator of the monitor server 300 and then the first icon 400A-5 is selected, the monitor server 300 may output (or display) the second user interface 400B as shown in FIG. 7(7-2).

The second user interface 400B may display detailed items related to calibration setting values. For example, the detailed items may include an ambient light item 400B-1, a color temperature item 400B-2, a luminance item 400B-3, and a calibration type item 400B-4. Detailed item values according to the selected calibration setting value may be displayed on the second user interface 400B. When at least one of the detailed item values is modified by the administrator of the monitor server 300 and then the third icon 400B-5 is selected, the calibration setting value is changed to reflect the modified detailed item value and stored in the monitor server 300.

On the other hand, when the fourth icon 400B-6 is selected, the monitor server 300 causes the first user interface 400A to be displayed again, and when the fifth icon 400B-7 is selected, the monitor server 300 may exit the calibration menu.

A creation menu 400A-3 for creating a new calibration setting value in the monitor server 300 may be displayed on the first user interface 400A. When the creation menu 400A-3 is selected by the administrator of the monitor server 300 and then the first icon 400A-5 is selected, the monitor server 300 may output (or display) the second user interface 400B as shown in FIG. 7(7-2).

As described above, the second user interface 400B may display detailed items related to the calibration setting values. For example, the detailed items may include an ambient light item 400B-1, a color temperature item 400B-2, a luminance item 400B-3, and a calibration type item 400B-4. When at least one of the detailed item values is modified by the administrator of the monitor server 300 and then the third icon 400B-5 is selected, the calibration setting value may be generated to reflect the modified detailed item values and stored in the monitor server 300.

A view menu 400A-4 for viewing the calibration setting value stored in the monitor server 300 may be displayed on the first user interface 400A. When the view menu 400A-4 is selected by the administrator of the monitor server 300 and then the first icon 400A-5 is selected, the monitor server 300 may output (or display) a third user interface 400C as shown in FIG. 8.

A calibration setting value selection menu 400C-1 and a verification setting value selection menu 400C-2 may be displayed on the third user interface 400C.

Through the calibration setting value selection menu 400C-1, one of i) the calibration setting value stored in the management target monitor, ii) the default calibration setting value stored in the monitor server 300, and iii) the plurality of preset setting values described above may be selected.

In addition, through the verification setting value selection menu 400C-2, one of i) the verification setting value stored in the management target monitor and ii) the default verification setting value stored in the monitor server 300 may be selected, and the uses of the management target monitor and related specifications may be selected. When the sixth icon 400C-3 is selected, the monitor server 300 may allow the selected calibration setting value and verification setting value to be applied to calibration and/or verification tasks. Meanwhile, when the seventh icon 400C-4 is selected, the monitor server 300 may exit the calibration menu.

Various aspects may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal. The foregoing aspects are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the exemplary aspects described herein may be combined in various ways to obtain additional and/or alternative exemplary aspects.

## Claims

1. A method for calibrating an image display device comprising:
storing a plurality of calibration setting values for calibration of a plurality of image display devices in a server, wherein the plurality of calibration setting values includes a first calibration setting value received from at least one of the plurality of image display devices and a second calibration setting value input by a user; and
when one of the plurality of calibration setting values is selected, remotely requesting, by the server, the plurality of image display devices to perform calibration based on the selected calibration setting value.

2. The method according to claim 1, further comprising:
storing a plurality of verification setting values for verification of the plurality of image display devices in the server, wherein the plurality of verification setting values includes a first verification setting value received from at least one of the plurality of image display devices; and
when one of the plurality of verification setting values is selected, remotely requesting, by the server, the plurality of image display devices to perform verification based on the selected verification setting value.

3. The method according to claim 2, wherein:
the plurality of calibration setting values further includes a third calibration setting value stored as a default in the server,
wherein the plurality of verification setting values further includes a second verification setting value stored as a default in the server.

4. The method according to claim 2 or 3, wherein:
the server requests the plurality of image display devices to perform at least one of the calibration and the verification through a plurality of client terminals.

5. The method according to claim 4, further comprising:
grouping the plurality of image display devices into two or more groups; and
performing calibration for each group.

6. The method according to claim 5, wherein:
when there are two or more image display devices belonging to each group, the two or more image display devices are connected to the server through different client terminals.

7. The method according to claim 5 or 6, further comprising:
setting, by the server, a schedule for calibration of image display devices of each group; and
performing, by the server, calibration of the image display device of each group according to the schedule.

8. The method according to any of claims 1 to 7, further comprising:
storing, by the server, characteristic information of the plurality of image display devices; and
when the plurality of image display devices is unable to support the selected calibration setting value according to the characteristic information, changing the selected calibration setting value based on the characteristic information.

9. The method according to claim any of claims 1 to 8, further comprising:
displaying, by the server, a user interface for creating, modifying, storing and deleting the calibration setting value.

10. The method according to any of claims claim 1 to 9, wherein:
the calibration setting value includes data related to luminance, color temperature, and gamma setting of the image display device.

11. A server for calibrating an image display device comprising:
a setting value management unit configured to store a plurality of calibration setting values for calibration of a plurality of image display devices in a server, wherein the plurality of calibration setting values includes a first calibration setting value received from at least one of the plurality of image display devices and a second calibration setting value input by a user; and
a task registration unit configured to, when one of the plurality of calibration setting values is selected, remotely request that the plurality of image display devices perform calibration based on the selected calibration setting value.

12. The server according to claim 11, wherein:
the setting value management unit is configured to store a plurality of verification setting values for verification of the plurality of image display devices, wherein the plurality of verification setting values includes a first verification setting value received from at least one of the plurality of image display devices; and
the task registration unit is configured to, when one of the plurality of verification setting values is selected, remotely request that the plurality of image display devices perform verification based on the selected verification setting value.

13. The server according to claim 12, wherein:
the plurality of calibration setting values further includes a third calibration setting value stored as a default in the server,
wherein the plurality of verification setting values further includes a second verification setting value stored as a default in the server.

14. The server according to claim 12 or 13, wherein:
the task registration unit is configured to request that the plurality of image display devices perform at least one of the calibration and the verification through a plurality of client terminals.

15. A recording medium for storing program configured to be executed by a computer for calibration of an image display device, comprising:
a command configured to store a plurality of calibration setting values for calibration of a plurality of image display devices, wherein the plurality of calibration setting values includes a first calibration setting value received from at least one of the plurality of image display devices and a second calibration setting value input by a user; and
a command configured to, when one of the plurality of calibration setting values is selected, remotely request that the plurality of image display devices perform calibration based on the selected calibration setting value.
